Europäisches Patentamt

European Patent Office

Office européen des brevets

(11) Veröffentlichungsnummer : **0 028 687**
**B1**

(12) **EUROPÄISCHE PATENTSCHRIFT**

(45) Veröffentlichungstag der Patentschrift :
03.11.82

(21) Anmeldenummer : 80105426.3

(22) Anmeldetag : 11.09.80

(51) Int. Cl.³ : **C 08 G 63/22**, C 09 J 3/16,
C 09 D 3/64, C 08 K 3/32,
C 08 K 5/52

(54) Verfahren zur Herstellung von hochmolekularen, linearen Polyestern.

(30) Priorität : 13.11.79 DE 2945729

(43) Veröffentlichungstag der Anmeldung :
20.05.81 (Patentblatt 81/20)

(45) Bekanntmachung des Hinweises auf die Patenterteilung : 03.11.82 Patentblatt 82/44

(84) Benannte Vertragsstaaten :
CH FR GB IT LI NL

(56) Entgegenhaltungen :
DE A 1 420 393
DE A 1 420 519
DE A 2 703 855
DE B 1 962 642
FR A 1 562 617
GB A 1 090 295
US A 2 989 499

(73) Patentinhaber : CHEMISCHE WERKE HÜLS AG
Postfach 1320
D-4370 Marl 1 (DE)

(72) Erfinder : Horlbeck, Gernot, Dr.
In der Thiebrei 80
D-4358 Haltern (DE)
Erfinder : Burzin, Klaus, Dr.
Wellerfeldweg 164
D-4370 Marl (DE)

Imprimerie Jouve, 18, rue St-Denis, 75001 Paris, France

## Verfahren zur Herstellung von hochmolekularen, linearen Polyestern

Gegenstand der Erfindung ist ein Verfahren zur Herstellung von hochmolekularen, linearen Copolyestern durch Kondensieren von 40 bis 85 Molprozent Terephthalsäure, die bis zu 50 % durch andere Dicarbonsäuren ersetzt sein können, 60 bis 15 Molprozent Adipinsäure mit Alkandiolen, die 2 bis 6 C-Atome in der Kohlenstoffkette besitzen, in 2 Stufen bei erhöhter Temperatur in Gegenwart von üblichen Katalysatoren.

Derartige Copolyester sowie ihre Herstellung sind grundsätzlich bekannt (Korshak/Vinogradova — Polyesters, Pergamon Press, Oxford (1965) — Seiten 141 ff ; Sorensen/Campbell — Polyesters, Interscience Publishers, New York (1961), Seiten 111 bis 127 ; US-PS 2 901 466).

Ihre Anwendung als pulverförmige Überzugsmittel (DE-ASS 26 11 691, 12 22 205) sowie als Schmelzkleber (DE-OS 27 03 417) ist gleichfalls beschrieben.

Bei den für die Polykondensation erforderlichen hohen Temperaturen, insbesondere in der 2. Kondensationsstufe (Polykondensationsstufe), ergeben sich durch die Adipinsäure bräunlich bis rot verfärbte Endprodukte, die vom Verarbeiter der Produkte nicht akzeptiert werden. Es wurde deswegen schon der Zusatz von Estern und Salzen von Phosphorsäuren in Verbindung mit Talkum vorgeschlagen (DE-OS 27 03 417). Bei niedrigem Adipinsäuregehalt (< 15 Molprozent bezogen auf die Säurekomponente) der Copolyester verbessern diese Maßnahmen teilweise die Farbe der Fertigprodukte. Bei höheren Adipinsäureanteilen können die unerwünschten Verfärbungen nicht im notwendigen Maße vermieden werden.

Hinzu kommt ein weiterer schwerwiegender Mangel adipinsäurehaltiger Copolyester. Sie besitzen in der Schmelze keine hinreichende Stabilität gegen einen thermooxidativen Abbau. Diese Eigenschaft ist jedoch z.B. bei Schmelzklebern unbedingt erforderlich, da diese bei ihrer Verarbeitung über eine längere Zeit in offenen Schmelzbehältern gehalten werden.

Aufgabe der vorliegenden Erfindung war es, lineare, hochmolekulare Polyester herzustellen, welche die aufgezeigten Nachteile nicht besitzen.

Die Aufgabe wurde dadurch gelöst, daß vor oder während der 1. Kondensationsstufe 0,005 bis 0,1 Molprozent — bezogen auf die Säurekomponente — Arylester der phosphorigen Säure oder Phosphorsäure dem Reaktionsgemisch zugesetzt werden und daß nach Beendigung der 2. Kondensationsstufe 0,01 bis 0,2 Molprozent — bezogen auf die Säurekomponente — unterphosphorige Säure der fertigen Copolyesterschmelze zugefügt werden.

Als Arylester der phosphorigen Säure oder Phosphorsäure kommen z.B. Tri-t.-butylphenyl-, Trinonylphenyl-, Trikresylphosphat o.ä. sowie die entsprechenden Phosphite infrage. Die erfindungsgemäße Aufgabe kann auch dann gelöst werden, wenn nur teilveresterte Verbindungen eingesetzt werden. Bevorzugt wird Triphenylphosphat verwendet. Die Arylester werden insbesondere in Mengen von 0,02 bis 0,06 Molprozent — bezogen auf die Säurekomponente — eingesetzt.

Die unterphosphorige Säure wird vorzugsweise in einer Menge von 0,03 bis 0,15 Molprozent — bezogen auf die Säurekomponente — zugesetzt. Sie wird z.B. als 50 %ige wäßrige Lösung in die Polyesterschmelze eingerührt.

Die Säurekomponente der Copolyester besteht zu 40 bis 85 Molprozent, vorzugsweise 50 bis 75 Molprozent, aus Terephthalsäure und zu 15 bis 60 Molprozent, vorzugsweise 25 bis 50 Molprozent, aus Adipinsäure.

Bis zu 50 % der Terephthalsäure kann durch weitere aromatische, cycloaliphatische und/oder aliphatische Dicarbonsäuren wie Phthalsäure, Isophthalsäure ; Tetra-(Hexa-)hydrophthalsäure, -isophthalsäure, -terephthalsäure ; Oxalsäure, Malonsäure, Bernsteinsäure, Glutersäure, Sebacinsäure, Decandicarbonsäure-(1. 10), u.a. ersetzt sein.

Alle genannten Säuren können als esterbildende Derivate eingesetzt werden.

Als Diole kommen Alkandiole mit 2 bis 6 C-Atomen in der Kohlenstoffkette infrage. Als Beispiele seien Ethylenglykol, Propylenglykol, Butylenglykol genannt. Bevorzugt werden Ethylenglykol und Butylenglykol eingesetzt. Die Alkandiole können auch im Gemisch verwendet werden.

Die Polyesterherstellung ist grundsätzlich bekannt (Sorensen und Campbell — Preparative Methods of Polymer Chemistry, Interscience Publishers, Inc., New York, 1961, Seiten 111 bis 127 ; Kunststoff-Handbuch, Band 8 (Polyester), Carl Hanser Verlag, München, 1973, Seite 697). So geht man z.B. von den Dimethylestern und den Diolen aus und führt zunächst nach Zusatz eines geeigneten Katalysators eine Umesterung aus. Im Falle, daß Dicarbonsäuren eingesetzt werden, kann die Veresterung gleichzeitig oder nach der Umesterung stattfinden. Diese Verfahrensstufe ist vorangehend als 1. Kondensationsstufe bezeichnet.

Anschließend wird unter Vakuum oder in Stickstoffstrom bei weiterem Erhitzen die Polykondensation durchgeführt (2. Kondensationsstufe).

Die Copolyester weisen eine Viskositätszahl von 50 bis 120, vorzugsweise 70 bis 100 cm$^3$/g, auf.

Ein weiterer Gegenstand der Erfindung ist die Verwendung der so erhaltenen Copolyester als Schmelzkleber oder pulverförmige Überzugsmittel.

Die erfindungsgemäß hergestellten und verwendeten Copolyester weisen unter Beibehaltung guter Allgemeineigenschaften eine hervorragende thermooxidative Stabilität auf. Die Produkte zeigen keinen Farbstich.

## Beispiele

Die im folgenden aufgeführten Ergebnisse sind mit Hilfe nachstehender Meßverfahren ermittelt worden :

1. Die Viskositätszahl wurde an Lösungen von 0,23 g Copolyester in 100 ml Phenol/1.1.2.2-Tetrachlorethan (Gewichtsverhältnis 60 : 40) bei 25 °C gemessen.

2. Die Farbmessungen wurden nach dem Dreibereichsverfahren gegen einen Weißstandard durchgeführt (DIN 5033).

3. Die Oxidationsstabilität wurde durch die prozentuale Abnahme der Viskositätszahl nach einstündiger Lagerung der Proben bei 250 °C im Umlufttrockenschrank charakterisiert.

## Polyesterherstellung

### Versuch 1

In einem 100 l-Kessel werden 27,2 kg Dimethylterephthalat, 8,7 kg Adipinsäure, 36 kg Butandiol-(1.4), 20 g Triphenylphosphat und 18 g Titantetraisopropylat bei 150 °C aufgeschmolzen und bei 190 °C im Stickstoffstrom unter Rühren um- bzw. verestert, bis die theoretische Menge an Methanol und $H_2O$ abgespalten ist.

Danach wird innerhalb einer Stunde die Reaktionstemperatur auf 250 °C erhöht und innerhalb einer weiteren Stunde ein Vakuum von 1 mbar angelegt. Unter diesen Bedingungen wird die Schmelze zwei Stunden polykondensiert. Dann wird das Vakuum aufgehoben und der Stickstoff abgetrieben ; der Schmelze werden 20 g unterphosphorige Säure (50 %ige Lösung in Wasser) zugesetzt und 30 Minuten eingerührt. Anschließend wird der Polyester ausgefahren, gekühlt und granuliert.

Man erhält ein Produkt mit einem nach der Differential-Scanning-Calorimetry (DSC)-Methode bestimmten Schmelzpunkt von 180 °C.

### Versuch 2

27,2 kg Dimethylterephthalat, 27 kg Butandiol-(1.4) sowie 20 g Titantetraisopropylat werden in einem 100 l-Kessel aufgeschmolzen und anschließend bei 190 °C im $N_2$-Strom solange umgesetzt bis die theoretisch berechnete Menge Methanol abgespalten wurde. Der Schmelze werden dann 50 g Triphenylphosphit zugegeben und 20 Min. eingerührt. Danach werden 8,7 kg Adipinsäure zugefügt und die Reaktion bei 190 °C und $N_2$-Strom fortgesetzt. Die Veresterung wird nach Abspaltung der theoretischen Wassermenge beendet.

Die Polykondensationsreaktion wird entsprechend Versuch 1 geführt.

Nach Abtreiben des Stickstoffs sowie Aufheben des Vakuums werden der Schmelze 40 g $H_3PO_2$ (50 %ige wäßrige Lösung) zugesetzt und 30 Min. lang eingerührt.

### Versuch 3

27,2 kg Dimethylterephthalat, 8,7 kg Adipinsäure sowie 32 kg Butandiol-(1.4) und 15 g Titantetraisopropylat werden zunächst bei 150 °C aufgeschmolzen und dann bei 190 °C im $N_2$-Strom unter Rühren um- bzw. verestert. Sind 2/3 der theoretisch berechneten Menge an Methanol und Wasser abgespalten, werden 12 g Tri-tert.-butylphenylphosphat der Reaktionsmischung zugegeben. Die Um- bzw. Veresterung wird dann bis zur Abspaltung der theoretischen Menge Methanol und Wasser fortgeführt.

Die sich anschließende Polykondensationsreaktion wird entsprechend Versuch 1 ausgeführt. Nach Aufheben des Vakuums und Abtreiben des Stickstoffs werden dem geschmolzenen Polyester 8 g unterphosphorige Säure zugesetzt und 45 Min. lang eingerührt.

### Versuche A und B (nicht erfindungsgemäß)

Die Vergleichsversuche werden nach der Arbeitsvorschrift von Versuch 1 hergestellt. Bei Versuch A wird nach der 2. Kondensationsstufe keine unterphosphorige Säure in die Schmelze des Copolyesters eingerührt ; dasselbe trifft auf Versuch B zu, mit dem Unterschied, daß in der 1. Kondensationsstufe anstelle von Triphenylphosphat Triphenylphosphit eingesetzt wird.

Die physikalischen Kennwerte (Viskosität, Schmelzpunkt) der Polyester entsprechen denen des erfindungsgemäßen Versuches.

(Siehe die Tabelle, Seite 4)

# 0 028 687

Tabelle

| Versuch | Viskositäts-zahl [cm³/g] | Abnahme der Viskositätszahl nach 1 h/250 °C/Luft [%] | Farbe (Blau/Gelb-Wert *) |
|---|---|---|---|
| 1 | 70 | 8 | − 5,7 |
| 2 | 67 | 8 | − 5,9 |
| 3 | 73 | 6 | − 6,2 |
| A | 72 | 25 | − 17,0 |
| B | 68 | 22 | − 10,4 |

\* Blau/Gelb-Wert von BaSO$_4$ : − 1,5

## Ansprüche

1. Verfahren zur Herstellung von hochmolekularen, linearen Copolyestern durch Kondensieren von 40 bis 85 Molprozent Terephthalsäure, die bis zu 50 % durch andere Dicarbonsäuren ersetzt sein kann, 60 bis 15 Molprozent Adipinsäure mit Alkandiolen, die 2 bis 6 C-Atome in der Kohlenstoffkette besitzen, in 2 Stufen bei erhöhter Temperatur in Gegenwart von üblichen Katalysatoren, dadurch gekennzeichnet, daß vor oder während der 1. Kondensationsstufe 0,005 bis 0,1 Molprozent — bezogen auf die Säurekomponente — Arylester der phosphorigen Säure oder Phosphorsäure dem Reaktionsgemisch zugesetzt werden und daß nach Beendigung der 2. Kondensationsstufe 0,01 bis 0,2 Molprozent — bezogen auf die Säurekomponente — unterphosphorige Säure der fertigen Copolyesterschmelze zugefügt werden.

2. Verfahren nach Anspruch 1, dadurch gekennzeichnet, daß vor oder während der 1. Kondensationsstufe 0,02 bis 0,06 Molprozent Arylester zugesetzt werden.

3. Verfahren nach Anspruch 1 und 2, dadurch gekennzeichnet, daß nach Beendigung der 2. Kondensationsstufe 0,03 bis 0,15 Molprozent unterphosphorige Säure der fertigen Copolyesterschmelze zugefügt werden.

4. Verfahren nach den Ansprüchen 1 bis 3, dadurch gekennzeichnet, daß als Arylester Triphenylphosphat verwendet wird.

5. Verwendung der Copolyester gemäß den Ansprüchen 1 bis 4 als Schmelzkleber.

6. Verwendung der Copolyester gemäß den Ansprüchen 1 bis 4 als pulverförmige Überzugsmittel.

## Claims

1. A process for the manufacture of a high molecular weight linear copolyester by condensation of 40 to 85 mol percent of terephthalic acid, up to 50 % of which is optionally replaced by other dicarboxylic acids, and 60 to 15 mol percent of adipic acid with an alkanediol of 2 to 6 carbon atoms in its carbon chain in two stages at elevated temperature in the presence of a conventional catalyst, characterised in that before or during the first condensation stage 0.005 to 0.1 mol percent, based on the acid components, of an aryl ester of phosphorous acid or phosphoric acid is added to the reaction mixture and in that after the end of the second condensation stage 0.01 to 0.2 mol percent, based on the acid components, of hypophosphorous acid is added to the molten copolyester produced.

2. A process according to claim 1, characterised in that before or during the first condensation stage 0.02 to 0.06 mol percent of the aryl ester is added.

3. A process according to claim 1 or 2, characterised in that after the end of the second condensation stage 0.03 to 0.15 mol percent of hypophosphorous acid is added to the molten copolyester produced.

4. A process according to any of claims 1 to 3, characterised in that triphenyl phosphate is used as the aryl ester.

5. The use of a copolyester according to any of claims 1 to 4 as a hot-melt adhesive.

6. The use of a copolyester according to any of claims 1 to 4 as a pulverulent coating agent.

## Revendications

1. Procédé de préparation de copolyesters linéaires à poids moléculaire élevé, par condensation de

4

40 à 85 mol% d'acide téréphtalique, qui peut être remplacé, à concurrence de 50 %, par d'autres acides dicarboxyliques, de 60 à 15 mol% d'acide adipique, avec des alcane-diols contenant de 2 à 6 atomes de carbone dans la chaîne carbonée, en deux stades, à température élevée, en présence de catalyseurs usuels, ledit procédé étant caractérisé par le fait qu'avant ou après le 1er stade de condensation, on ajoute au mélange réactionnel de 0,005 à 0,1 mol% — relativement au constituant acide — d'esters aryliques de l'acide phosphoreux ou de l'acide phosphorique et qu'après la fin du 2ème stade de condensation, on ajoute de 0,01 à 0,2 mol% — relativement au constituant acide — d'acide hypophosphoreux à la masse fondue finie de copolyester.

2. Procédé selon la revendication 1, caractérisé par le fait qu'avant ou pendant le 1er stade de condensation, on ajoute de 0,02 à 0,06 mol% d'esters aryliques.

3. Procédé selon les revendications 1 et 2, caractérisé par le fait qu'après la fin du 2ème stade de condensation, on ajoute à la masse fondue finie de copolyester, de 0,03 à 0,15 mol% d'acide hypophosphoreux.

4. Procédé selon les revendications 1 à 3, caractérisé par le fait qu'on utilise, comme ester arylique, le phosphate de triphényle.

5. Application des copolyesters selon les revendications 1 à 4 comme adhésifs fusibles.

6. Application des copolyesters selon les revendications 1 à 4 comme agents de revêtement pulvérulents.